# EUROPÄISCHE PATENTSCHRIFT

(11) **EP 1 655 318 B1**
(45) Veröffentlichungstag und Bekanntmachung des Hinweises auf die Patenterteilung: **14.08.2013**
(21) Anmeldenummer: 05022994.7
(22) Anmeldetag: 21.10.2005
(51) Int. Cl.: C08G 18/67, C09D 175/16, C09D 167/07

(54) **Niederviskose, wässrige, strahlenhärtbare Urethan-Bindemitteldispersionen mit hohen Festkörpergehalten**
High solids low-viscosity aqueous radiation curable urethane binder dispersions
Dispersions aqueuses de liant uréthane durcissable aux rayons ayant un haut extrait sec et une faible viscosité

(30) Priorität: 04.11.2004 DE 102004053186
(43) Veröffentlichungstag der Anmeldung: 10.05.2006
(73) Patentinhaber: Bayer Intellectual Property GmbH, 40789 Monheim (DE)
(72) Erfinder: Müller, Manfred, 41066 Mönchengladbach (DE); Kopp, Richard, Dr., 51061 Köln (DE); Fischer, Wolfgang, Dr., 40668 Meerbusch (DE); Weikard, Jan, Dr., 51519 Odenthal (DE)
(74) Vertreter: BIP Patents

(56) Entgegenhaltungen:
- EP-A- 0 320 734
- EP-A- 0 367 464
- EP-A- 0 584 734
- EP-A- 0 753 531

## Beschreibung

Die Erfindung betrifft wässrige, strahlenhärtbare Urethan-Bindemitteldispersionen mit hohen Festkörpergehalten bei niedriger Verarbeitungsviskosität.

Die Herstellung von wässrigen Polyurethandispersionen ist Stand der Technik und wird in der Patentliteratur und in Standardwerken umfangreich beschrieben. Die Dispersionen werden nach dem Aufbringen auf das Substrat und dem Verdunsten des Wassers im Allgemeinen bei höheren Temperaturen und/oder mit speziellen Härtern vernetzt, was allerdings die Einsatzmöglichkeiten einschränkt. Diese Einschränkungen können durch den Einsatz strahlenvernetzbarer Urethan-Dispersionen umgangen werden.

Eine Möglichkeit zur Herstellung lösemittelfreier, strahlenhärtbarer, wässriger Bindemitteldispersionen besteht im Einsatz einer Kombination aus einem strahlenhärtbaren Bindemittel und einem strahlenhärtbaren Emulgator. Dabei werden in den Emulgator zur Hydrophilierung Segmente mit ionischen Zentren, insbesondere Sulfonat- oder Carbonsäuresalzgruppen, oder hydrophile nichtionische Segmente, wie z.B. Polyoxyethylensegmente, eingebaut. Weitere Produkte werden z.B. in der EP-A 0 584 734 beschrieben. In den Beispielen werden Dispersionen mit Festkörpergehalten bis zu 62 % hergestellt.

Wässrige Dispersionen auf Basis von wasserdispergierbaren, strahlenhärtbaren Polyurethanacrylaten, deren Herstellung und Verwendung werden in der EP-A 0 753 531 offenbart. Nach diesem Verfahren können Dispersionen mit einem hervorragenden Eigenschaftsprofil und Festkörpergehalten bis zu maximal 60 Gew.-% hergestellt werden, wobei die Eigenschaften durch gezielte Auswahl der Aufbaukomponenten des Bindemittels den Anforderungen entsprechend eingestellt werden können.

EP-A-0 320 734 offenbart wasserlösliche mit UV-Licht härtbare Bindemittel für die Oberflächenbeschichtung von z.B. Holz, die eine hydrophile ungesättigte Polyesterverbindung, hergestellt aus Polyethylenglycolen, einem Trimethylolpropanderivat, Maleinsäureanhydrid und Acrylsäure, enthalten, wobei Hexandiolacrylat als Reaktiosverdünner und Inhibitoren zugesetzt werden können.

Bei allen bisher bekannten Verfahren sind aber für eine praktische Handhabung, insbesondere bezogen auf die Viskosität der Formulierungen, dem Festkörpergehalt Grenzen gesetzt, die in der Regel bei einem maximalen Festkörpergehalt von ca. 50 bis 65 Gew.-% liegen. Wünschenswert sind aber Dispersionen mit einem noch höheren Festkörpergehalt, weil dadurch die Kosten für Herstellung, Lagerung, Transport, Applikation und der Zeitbedarf für die Wasserentfernung nach der Applikation verringert werden können. Besonders wünschenswert aus der Sicht des Verarbeiters ist eine wasserfreie und Colöser-freie Formulierung (100 %ige Lieferform), die vor Ort mit der zur Einstellung einer gewünschten Viskosität benötigten Wassermenge vermischt und dann verarbeitet werden kann.

Der vorliegenden Erfindung liegt daher die Aufgabe zugrunde, niederviskose, wässrige, UV-härtende Lacke mit einem Festkörpergehalt bis zu 90 Gew.-% und darüber, bzw. vor Ort entsprechend Wasser-verdünnbare Bindemittel zur Verfügung zu stellen. Ferner sollten die hochkonzentrierten Dispersionen eine gute Lagerstabilität zur Gewährung einer ausreichenden Lager- und Verarbeitungszeit aufweisen.

Diese Aufgabe wird durch eine speziellen Kombination zweier ungesättigter Bindemittel gelöst. Die erfindungsgemäßen Bindemittelkombinationen weisen eine sehr hohe Reaktivität auf und führen nach Aushärtung zu schleierfreien Filmen mit guter Haftung, geringer Vergilbung, guter mechanischer und chemischer Beständigkeit und guter Kratzfestigkeit, insbesondere einer verbesserten Beständigkeit gegenüber Butter, Öl und Paraffinen.

Gegenstand der vorliegenden Erfindung sind somit wasser- und Colöser-freie Bindemittelkompositionen (A), bestehend aus einer Mischung aus
(A1) mindestens einem Urethanacrylat als, emulgatorfreies, hydrophobes Bindemittel, welches durch energiereiche Strahlung polymerisierbare Gruppen enthält und
(A2) mindestens einer hydrophilen ungesättigten Polyesterverbindung auf Basis
   (a) mindestens einer ungesättigten Dicarbonsäure und/oder deren Anhydriden,
   (b) mindestens einer Polyalkylenoxidverbindung mit einem Molekulargewicht von 106 bis 2000 Dalton, bevorzugt von 200 bis 1000 Dalton, besonders bevorzugt von 200 bis 500 Dalton, mit mindestens 2 Hydroxylendgruppen und mindestens 2 Oxyalkylen-Einheiten, die zu mindestens 50 %, bevorzugt zu mindestens 70 %, besonders bevorzugt zu mindestens 90 % aus Oxyethyleneinheiten bestehen, und
   (c) mindestens einer Hydroxy-funktionellen Verbindung, die pro Molekül mindestens eine polymerisierbare ungesättigte Gruppe, ausgewählt aus der Gruppe der Vinyl-, Allyl-, Methacryl- oder Acryl-Gruppen, aufweist.

Zusammen mit der Komponente (A1) können gegebenenfalls auch noch handelsübliche Reaktivverdünner eingesetzt werden, wie z.B. Dipropylenglykoldiacrylat, Hexandioldiacrylat, Isobornylacrylat oder Trimethylolpropantriacrylat.

Die Komponenten (A1) und (A2) werden in einem Gewichtsverhältnis von 90:10 bis 50:50, bevorzugt 90:10 bis 60:40, besonders bevorzugt 85:15 bis 75:25 eingesetzt.

Gegenstand der Erfindung sind ebenfalls wässrige Dispersionen, enthaltend die erfindungsgemäßen Bindemittelkombinationen (A).

100 Gew.-Teile der erfindungsgemäßen wässrigen Dispersion enthalten mindestens 10 Gew.-Teile, bevorzugt mindestens 40 Gew.-Teile, besonders bevorzugt mindestens 60 Gew.-Teile der strahlenhärtbaren Bindemittelkombination (A). Gegebenenfalls können 100 Gew.-Teile der wässrigen Dispersion bis zu 200 Gew.-Teile üblicher Zusatzmittel (B), wie z.B. Sperrmittel und/oder Verdickungsmittel und/oder anderer Lackbestandteile wie z.B. Initiatoren, Pigmente, Füllstoffe oder Mattierungsmittel und gegebenenfalls bis zu 30 Gew.-Teile mindestens eines polaren, wassermischbaren Lösungsmittels (C) zugesetzt werden.

Hydrophob im Sinne der vorliegenden Erfindung bedeutet, dass ohne Zusatz eine Emulgators, die Komponente (A1) in Wasser nicht in einer Konzentration von mehr als 20 Gew.-% stabil dispergierbar ist.

Das Urethanacrylat (A1) wird hergestellt durch Veresterung von
d) mindestens einer difunktionellen Hydroxyverbindung mit mindestens 2 eingebauten Oxyethylengruppen pro Molekül, mit, bezogen auf die Hydroxylgruppen in (d), einem molaren Unterschuss an
e) Acrylsäure und/oder Methacrylsäure und
   anschließender Umsetzung der noch vorhandenen Hydroxylgruppen mit
f) mindestens einem Polyisocyanat mit an aliphatischen Kohlenstoff-Resten gebundenen Isocyanatgruppen.

Zur Herstellung des Urethanacrylates (A1) werden (d) Hydroxyverbindungen mit mindestens 2 eingebauten Oxyethylengruppen pro Molekül eingesetzt. Diese Verbindungen sind Stand der Technik und werden z.B. erhalten durch Umsetzung von Dihydroxyverbindungen wie Glkyolen, z.B. Ethylenglykol, Diethylenglykol, Triethylenglykol, Propylenglykol oder Butandiol-1,4, oder Polyhydroxyverbindungen wie z.B. Trimethylolpropan oder Glycerin mit mindestens 2 mol Ethylenoxid pro mol Hydroxyverbindung.

Addukte aus 1 mol Trimethylolpropan und 2 bis 15 mol Ethylenoxid werden bevorzugt als (d) eingesetzt. Auch Gemische aus diesen Verbindungen können eingesetzt werden. Besonders bevorzugt sind Addukte aus Trimethylolpropan und 3 - 6 mol Ethylenoxid.

Diese Hydroxyverbindungen werden mit einer ungesättigten Monocarbonsäure (e), bevorzugt Acrylsäure oder Methacrylsäure, besonders bevorzugt Acrylsäure verestert. Dabei werden die in den Hydroxyverbindungen vorliegenden Hydroxylgruppen nur zu 50 bis 95 %, bevorzugt zu 70 bis 90 %, besonders bevorzugt zu 80 bis 90 % verestert.

Die noch vorhandenen freien Hydroxylgruppen werden anschliessend mit mindestens einem (f) Polyisocyanat mit an aliphatische C-Reste gebundenen Isocyanatgruppen umgesetzt, so dass mehrere der teil-acrylierten Hydroxyverbindungen über Urethangruppen miteinander verbunden werden.

Geeignete Di- und Polyisocyanate (f) sind aliphatische oder cycloaliphatische Polyisocyanate. Es können auch Mischungen solcher Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat oder deren Derivate mit Urethan-, Isocyanurat-, Allophanat-, Biuret-, Uretdion-, Iminooxadiazindionstruktur und Mischungen derselben. Bevorzugt sind Hexamethylendiisocyanat, Isophorondiisocyanat und die isomeren Bis(4,4'-isocyanatocyclohexyl)methane sowie deren Mischungen.

Das Äquivalentverhältnis der Isocyanatgruppen zu den freien Hydroxylgruppen wird bevorzugt im Bereich von 1:0,9 bis 1:1,1 gewählt, besonders bevorzugt im Bereich von 1:0,95 bis 1:1,05.

Die Umsetzung zwischen der Isocyanatkomponente und der Hydroxyverbindung wird bevorzugt mit geringen Mengen eines üblichen Urethankatalysators katalysiert. Geeignet sind hierfür tertiäre Amine, Zinn-, Zink- oder Wismutverbindungen, insbesondere Triethylamin, 1,4-Diazabicyclo-[2;2,2]-octan, Zinn-dioctoat oder Dibutylzinndilaurat. Die Menge des Katalysators kann durch den Fachmann den Erfordernissen der Reaktion angepasst werden. Übliche Mengen sind z.B. 0,01 bis 2 Gew.-%, bevorzugt 0,05 bis 1 Gew.-%, besonders bevorzugt 0,07 bis 0,6 Gew.-%, bezogen auf die gesamte Umsatzmasse.

Wird das erhaltene Urethanacrylat längere Zeit gelagert, so wird es bevorzugt mit einem Stabilisator zur Unterbindung einer vorzeitigen Polymerisation versetzt, wie z.B. 2,6-Di-t-butyl-4-methylphenol.

Zur Herstellung des emulgierend wirkenden ungesättigten Polyesters (A2) werden (a) ungesättigte Dicarbonsäuren oder deren Anhydride oder deren Diester mit niedermolekularen Alkoholen, bevorzugt ist Maleinsäureanhydrid, mit (b) Polyhydroxyverbindungen, die mindestens 50 %, bevorzugt 70 %, besonders bevorzugt 90 % Oxyethyleneinheiten (bez. auf die Summe der enthaltenen Oxyalkyleneinheiten) enthalten und ein zahlenmittleres Molekulargewicht Mₙ von 106 bis 2000 aufweisen, umgesetzt. Bevorzugt als (b) werden z.B. mittel- bis langkettige Polyethylenglykole mit Molekulargewichten von 200 bis 1000, besonders bevorzugt von 200 bis 500, eingesetzt.

Gegebenenfalls kann die Komponente b) zusätzlich bis zu 10 Gew.-% Propylenglykol enthalten.

Das Äquivalentverhältnis von ungesättigten Dicarbonsäure(anhydrid) (a) zu Polyhydroxyverbindungen (b) wird so gewählt, dass die gebildeten Polymerketten Carboxylgruppen als Endgruppen aufweisen.

Diese freien Carboxylgruppen werden mit monohydroxy-funktionellen Verbindungen (c) mit mindestens einer polymerisierbaren ungesättigten Gruppe pro Molekül verestert, wie z.B. Trimethylolpropan-diallylether, Hydroxyethylacrylat; Hydroxypropylacrylat, Hydroxybutyl-acrylat, Trimethylolpropan-diacrylat, Glycerin-monoacrylat-monomethacrylat oder deren Umsetzungsprodukten mit Caprolacton. Bevorzugt werden z.B. Trimethylolpropan-diallylether, Trimethylolpropandiacrylat, Hydroxyethylacrylat eingesetzt, besonders bevorzugt ist Trimethylolpropan-diallylether.

Gegenstand der Erfindung ist weiterhin ein Verfahren zur Herstellung einer wässrigen Dispersion, enthaltend die erfindungsgemäße Bindemittelkomposition, dadurch gekennzeichnet, dass die Bindemittelkomposition mit Wasser verdünnt wird, wobei die gewünschte Lackviskosität durch die Menge des zugegebenen Wassers eingestellt wird.

Gegenstand der Erfindung ist weiterhin ein Verfahren zur Verdünnung der erfindungsgemäßen Bindemittelkomposition mit Wasser, dadurch gekennzeichnet, dass zunächst eine 70 %ige Dispersion der erfindungsgemäßen Bindemittelkomposition in Wasser hergestellt wird, indem zu 70 Gew.-Teilen des Gemisches aus (A1) und (A2) 30 Gew.-Teile Leitungswasser unter langsamem Rühren zugesetzt werden und anschliessend 2 Minuten bei hoher Tourenzahl (Umfanggeschwindigkeit der Rührscheibe: ca. 20 m/sec) mittels Dissolver emulgiert werden. Unter verringerter Tourenzahl werden die wässrigen Bestandteile zugesetzt. Diese konzentrierte Dispersion kann dann durch Zusatz von weiterem Leitungswasser auf den gewünschten Festkörpergehalt verdünnt werden.

Bei direkter Weiterverarbeitung kann auch vor Ort das Wasser unter einfachem Rühren zugesetzt werden.

Soll der Festkörpergehalt höher als 70 % liegen, so wird die erfindungsgemäße Bindemittelkomposition direkt im gewünschten Mischungsverhältnis angesetzt und zum Vermischen wie oben beschrieben verfahren.

Nichtwässrige Additive müssen vor dem Emulgieren der Mischung aus (A1) und (A2) in dieser Mischung dispergiert werden.

Pigmentierte Lacke sollten je nach Pigmentierungsgrad/Füllhöhe entweder im reinen Harz oder nach vorheriger Herstellung einer Stammemulsion (ca. 75%ig) mittels Dissolver dispergiert werden. Bei einer Dispergierung im Harz muss das Mahlgut vor dem Emulgieren auf 35°C abgekühlt werden.

Zur UV-Härtung sind flüssige Initiatoren erforderlich. Diese werden dem Harz vor dem Emulgieren zugesetzt. Vor der Strahlungshärtung muss das Wasser vollständig abgedunstet sein.

Gegenstand der vorliegenden Anmeldung ist ebenfalls ein Verfahren zur Herstellung von Beschichtungen, dadurch gekennzeichnet, dass eine wässrige Dispersion, enthaltend die erfindungsgemäßen Bindemittelkompositionen, auf ein Substrat appliziert, das Wasser entfernt und anschließend gehärtet wird.

Die erfindungsgemäßen Beschichtungsmittel lassen sich durch die üblichen Techniken auf unterschiedlichste Substrate applizieren, wie beispielsweise durch Spritzen, Walzen, Rakeln, Gießen, Sprühen, Streichen oder Tauchen. Substrate sind ausgewählt aus der Gruppe Holz, Metall, Kunststoff, Papier, Leder, Textilien, Filz, Glas oder mineralische Untergründe. Bevorzugte Substrate sind Holz und Kunststoffe.

Die applizierten Schichtdicken (vor der Härtung) liegen typischerweise zwischen 0,5 und 1000 µm, bevorzugt zwischen 5 und 500 µm, besonders bevorzugt zwischen 15 und 200 µm.

Die Härtung kann thermisch oder durch Einwirkung energiereicher Strahlung erfolgen. Bevorzugt erfolgt die Härtung durch Einwirkung energiereicher Strahlung, also UV-Strahlung oder Tageslicht, z.B. Licht der Wellenlänge 200 bis 700 nm, oder durch Bestrahlen mit energiereichen Elektronen (Elektronenstrahlung, 150 bis 300 keV). Als Strahlungsquellen für Licht oder UV-Licht dienen beispielsweise Hoch- oder Mitteldruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Excimerstrahler sind ebenfalls möglich. Die Strahler können mit Filtern ausgestattet sein, die den Austritt eines Teils des emittierten Strahlerspektrums verhindern. Beispielsweise kann z.B. aus arbeitshygienischen Gründen die dem UV-C oder UV-C und UV-B zugeordnete Strahlung herausgefiltert werden. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des Weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Als Initiatoren für eine radikalische Polymerisation können durch Strahlung und/oder thermisch aktivierbare Initatoren als Komponente (B) zum Einsatz kommen. Fotoinitiatoren, die durch UV-oder sichtbares Licht aktiviert werden, sind hierbei bevorzugt. Fotoinitiatoren sind an sich bekannte, komerziell vertriebene Verbindungen, wobei zwischen unimolekularen (Typ I) und bimolekularen (Typ II) Initiatoren unterschieden wird. Geeignete (Typ I)-Systeme sind wie aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α-Aminoalkylphenone, α,α-Diakoxyacetophenone und α-Hydroxyalkylphenone. Bevorzugt sind Fotoinitiatoren, die leicht in wässrige Beschichtungsmittel einarbeitbar sind. Solche Produkte sind beispielsweise Irgacure^{®} 500, Irgacure^{®} 819 DW (Fa. Ciba, Lampertheim, DE), Esacure^{®} KIP (Fa. Lamberti, Aldizzate, Italien). Es können auch Gemische dieser Verbindungen eingesetzt werden.

Wird die Härtung thermisch initiiert, eignen sich Peroxyverbindungen wie Diacylperoxide z.B. Benzoylperoxid, Alkylhydroperoxid wie Diisopropylbenzolmonohydroperoxid, Alkylperester wie tert.-Butylperbenzoat, Dialkylperoxide wie Di.-tertbutylperoxid, Peroxidicarbonate wie Dicetylperoxiddicarbonat, anorganische Peroxide wie Ammoniumperoxodisulfat, Kaliumperoxodisulfat oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide, 2,2'-Azobis{2-methyl-N-[1,1-bis(hydroxymethyl)-2-hydroxyethyl] propionamide, weiterhin auch Benzpinakol. Bevorzugt werden Verbindungen, die wasserlöslich sind oder als wässrige Emulsionen vorliegen. Diese Radikalbildner können in bekannter Weise mit Beschleunigern kombiniert werden.

Als Zusatzmittel (B) werden z.B. Sperrmittel eingesetzt. Sperrmittel sind Wachse, bevorzugt Paraffine mit einem Schmelzpunkt zwischen 35°C und 100°C, bevorzugt 40°C bis 80°C. Sie werden den Bindemittel-Dispersionen bevorzugt in Form wässriger Dispersionen zugesetzt. Sie reichern sich an der Grenzfläche Luft-wässrige Dispersion an und verhindern so die Inhibierung der Polymerisation durch den Sauerstoff der Luft.

Weiterhin verwendbare Zusätze (B) sind Stabilisatoren, Lichtschutzmittel wie UV-Absorber und sterisch gehinderte Amine (HALS, Hindered Amine Light Stabilizer), weiterhin Antioxidantien, Füllstoffe sowie Lackhilfsmittel, z.B. Antiabsetzmittel, Entschäumungs- und/oder Netzmittel, Verlaufmittel, Weichmacher, Katalysatoren, Hilfslösemittel und/oder Verdicker sowie Pigmente, Farbstoffe und/oder Mattierungsmittel. Diese Zusatzmittel sind dem Fachmann bekannt und Stand der Technik.

Als Komponente (C) werden wassermischbare, polare Lösungsmittel eingesetzt. Als wasserverdünnbare Lösungsmittel können z.B. niedermolekulare Alkohole wie Ethanol, Isopropanol oder niedermolekulare Ketone wie z.B. Aceton oder Butanon (Methylethylketon) eingesetzt werden.

Durch den Zusatz dieser Lösungsmittel in Mengen von maximal bis zu 10 %, bevorzugt 5 %, besonders bevorzugt kleiner 2 %, bezogen auf die wässrige Dispersion, wird die Viskosität der Dispersionen im Gebiet der hohen Festkörpergehalte zu niedrigeren Werten verschoben. Das bedeutet, dass der so genannte Wasserberg zu niedrigeren Festkörpergehalten verschoben wird, d.h. bei gleichem, hohem Festkörpergehalt wird die Viskosität wesentlich reduziert.

Die wässrigen Bindemittel-Dispersionen, enthaltend die erfindungsgemäßen Bindemittelkompositionen, lassen sich problemlos mit weiteren Bindemitteln wie Polyurethandispersionen oder Polyacrylatdispersionen, die gegebenenfalls auch hydroxyfunktionell sein können, kombinieren.

Gegenstand der Erfindung ist auch die Verwendung der erfindungsgemäßen Bindemittelkompositionen zur Herstellung von Beschichtungsmittel, die als Klebstoffe, Dichtmassen und Lacke eingesetzt werden können. Bevorzugt ist die Verwendung zur Beschichtung von Holz, beispielsweise in der Möbel- oder Parkettbeschichtung.

Die erfindungsgemäßen Bindemittelkompositionen enthalten praktisch keine flüchtigen Anteile. Sie lassen sich bevorzugt als UV-härtende Reaktionskomponenten für z.B. lösemittel- und aminfreie Wasserlacke, klar und pigmentiert, glänzend und matt einsetzen. Die daraus hergestellten Lackierungen sind brillant, kratzfest und beständig gegen Wasser, Alkohol, Lösemittel und Haushaltschemikalien.

### Beispiele

### Beispiel 1: Herstellung des Urethanacrylates (A1)

4905,04 Gew.-T1. eines mit 2,6 mol Acrylsäure veresterten Additionsproduktes aus 1 mol Trimethylolpropan und 3,9 mol Ethylenoxid werden mit 5,40 Gew.-Tl. Desmorapid^{®} Z (Dibutylzinndilaurat der Bayer AG, DE) und 5,40 Gew.-Tl. 2,6-Di-t-butyl-4-methyl-phenol als Inhibitor versetzt und unter Luft-durchleiten auf 60°C erhitzt. Dann werden 494,96 Gew.-Tl. Isophorondiisocyanat zugetropft, wobei die Innentemperatur durch Aussenkühlung auf 60°C gehalten wird. Es wird weitergerührt, bis ein NCO-Gehalt von ≤ 0,1 Gew.-% erreicht ist.

### Beispiel 2: Herstellung des ungesättigten Polyesters (A2)

Einsatzmengen:

| | |
|---|---|
| 397,26 g | Polyethylenglykol 400 |
| 91,86 g | Trimethylolpropan-diallylether |
| 105,20 g | Maleinsäureanhydrid |
| | Toluhydrochinonpaste: 0,03 % bez. auf Ansatzgröße |
| | (Toluhydrochinon = 2-Methylhydrochinon = 2,5-Dihydroxytoluol) |

### Versuchsdurchfiihrung:

Polyethylenglykol, Maleinsäureanhydrid und Toluhydrochinon-Paste werden in ca. 1 Stunde unter Ausnutzung der exothermen Reaktion in einem 1 1 Dreihalskolben auf 150°C geheizt und 3 Stunden bei 150°C gehalten, wobei ständig das einfache Kolbenvolumen pro Stunde an Stickstoff durchgeleitet wird. Danach wird auf 130°C unter Durchleiten des zweifachen Kolbenvolumens pro Stunde an Stickstoff abgekühlt und unter weiterer Stickstoffdurchleitung der Trimethylolpropan-diallylether zugegeben. Dann wird in 4 Stunden stufenweise auf 180°C aufgeheizt (150, 160, 170, 180°C), bei 180°C wird die Temperatur gehalten bis die Viskosität (75%ig in Styrol) von 30 bis 35" erreicht ist.

Es wird auf 160°C abgekühlt und bei dieser Temperatur gehalten, bis die Viskosität 75%ig in Styrol von 40 bis 45"erreicht ist (angestrebter Wert: 43"; Säurezahl 25 - 15).

Abschließend wird auf ≤ 80°C abgekühlt und abgefüllt.

### Beispiel 3: Herstellung einer 70 %igen, verdünnbaren wässrigen Dispersion der Mischung des Urethanacrylates (A1) nach Beispiel 1 und des ungesättigten Polyesters (A2) nach Beispiel 2

Es werden 70 Gew.-Tl. einer Mischung aus 20 Gew.-Tl. des Emulgators nach Beispiel 2 und 80 Gew.-T1. des Urethanacrylates nach Beispiel 1 vorgelegt, unter langsamem Rühren 30 Gew.-Tl. Leitungswasser hinzugegeben und anschließend ca. 2 Minuten bei hoher Tourenzahl (Umfanggeschwindigkeit der Rührscheibe: 20 m/sec) mittels Dissolver emulgiert. Unter verringerter Tourenzahl werden die wässrigen Restbestandteile der Rezeptur zugesetzt. Die Abmischung weist abhängig von der eingesetzten Rezeptur gegebenenfalls eine begrenzte Lagerstabilität auf. Innerhalb dieser Zeit kann sie durch Zusatz von weiterem Wasser auf den gewünschten Festkörpergehalt verdünnt werden.

Soll der Festkörpergehalt höher als 70 % liegen, so kann die Mischung direkt im gewünschten Mischungsverhältnis angesetzt und zum Vermischen wie oben beschrieben verfahren werden.

### Beispiel 4: Verdünnungsverhalten mit Wasser

Setzt man nach dem in Beispiel 3 beschriebenen Verfahren wässrige Dispersionen des 80:20 Gemisches aus Urethanacrylat und Emulgierharz mit verschiedenen Wassermengen an, so erhält man Dispersionen mit steigender Viskosität bei steigendem Festkörpergehalt mit einem Maximum von ca. 10.000 mPas (sog. "Wasserberg") bei ca. 80 Gew.-% Festkörper/20 Gew.-% Wasser (25°C). Danach fällt die Viskosität wieder ab bis in einen Bereich < 1.000 mPas bei 90 Gew.-% Festkörper.

**Tabelle 1**

| Verdünnungsverhalten eines Harzgemisches aus | | | | | | | | | | | |
|---|---|---|---|---|---|---|---|---|---|---|---|
| 80 Gew.-% Urethanacrylat (Beispiel 1) und 20 Gew.-% Emulgatorharz (Beispiel 2) | | | | | | | | | | | |
| **Festkörpergehalt [Gew.-%]** | **100** | **95** | **90** | **85** | **80** | **75** | **70** | **65** | **60** | **55** | **50** |
| **Wassergehalt [Gew.-%]** | **0** | **5** | **10** | **15** | **20** | **25** | **30** | **35** | **40** | **45** | **50** |

| **Viskosität bei 23°C [mPas]** | | | | | | | | | | | |
|---|---|---|---|---|---|---|---|---|---|---|---|
| **Harzlieferform** | **1.900** | **800** | **900** | **6.000** | **10.000** | **6.500** | **1.500** | **200** | **100** | **< 20** | **< 20** |
| **Harzlieferform + 2 % Aceton** | **1.900** | **1.100** | **600** | **100** | **400** | **4.000** | **7.000** | **4.000** | **300** | **< 20** | **< 20** |
| **Harzlieferform + 2 % Ethanol** | **1.900** | **1.100** | **700** | **200** | **600** | **2.700** | **4.500** | **2.700** | **200** | **< 20** | **< 20** |

Durch den Zusatz von 2 Gew.-% Ethanol oder 2 Gew.-% Aceton kann dieser "Wasserberg" in der Höhe der Viskosität verringert und nach niedrigeren Festkörpergehalten/höheren Wassergehalten verschoben werden, so dass auch im Bereich eines Festkörpergehaltes von ca. 80 bis > 90 Gew.-% ein niederviskoser Bereich entsteht, der für die Verarbeitung besonders geeignet ist.

Des Weiteren liegt die Viskosität bereits ohne Lösungsmittelzusatz für Feststoffkonzentrationen bis zu ca. 70 Gew.-% in einem für die Verarbeitung geeigneten Bereich.

Je nach Viskosität der Formulierungen können Applikationsverfahren wie Walzen, Spritzen, Giessen u.ä. eingesetzt werden.

### Beispiel 5: Löslichkeit des Urethanacrylates nach Beispiel 1 im vollentsalztem Wasser und Leitungswasser

100 Gew.-Tle. des Urethanacrylates nach Beispiel 1 werden in 100 Gew.-Tle. Wasser in einem Scheidetrichter intensiv geschüttelt. Nach der Phasenseparation werden beide Phasen auf ihren Wassergehalt analysiert (Titration nach Karl Fischer). Folgende Ergebnisse werden erhalten:

**Tabelle 2**

| **Wasserart** | **% Wasser in organischer Phase** | **% Wasser in wässriger Phase** |
|---|---|---|
| vollentsalztes Wasser | 4,0 | 100,1 |
| Leitungswasser | 3,4 | 100,5 |

Die Wasserwerte der wässrigen Phase (> 100%) sind bedingt durch die bei höheren Wassergehalten zunehmende Ungenauigkeit der Karl-Fischer Titration.

Der Versuch zeigt, dass das Urethanacrylat nach Beispiel 1 in Wasser praktisch unlöslich ist. Das Urethanacrylat selbst kann eine geringe Menge Wasser aufnehmen, diese Phase ist aber nicht homogen (Trübung).

### Beispiel 6: Anwendungsbeispiel Herstellung eines klaren, matten Walzlackes

Der aus Beispiel 3 erhaltenen Harzmischung aus Urethanacrylat und Emulgator (davon 100 Gew.-Tl.) werden jeweils 2 Gew.-Tl. Mattierungsmittel (Deuteron^{®} MK, Fa. Schöner, Achim-Uphusen und Gasil^{®} EBN, Fa. Omya DE) sowie 3 Tl. Esacure^{®} KIP 100F (Fratelli Lamberti, Italien) zugerührt. Danach erfolgt mit 43 und 11 Tl. Leitungswasser die Emulgierung und weitere Verdünnung wie in Beispiel 3 beschrieben. Die Viskosität des hier beschriebenen 65 %igen Lackes beträgt ca. 2200 mPa·s/23°C. Nach Lagerung über Nacht (Reifung) wird dieser Lack mit ca. 15 g/m² auf vorimprägnierte Folie aufgetragen, ca. 1 Min. bei 60°C abgelüftet und bei einer Bandgeschwindigkeit von 7 m/min/80 W-Strahler (oder unter Inertgas vielfach schneller) gehärtet. Es resultiert eine kratzfeste, beständige, seidenmatte Lackierung mit Brillianz.

## Patentansprüche

1. Wasser- und Colöser-freie Bindemittelkompositionen (A), bestehend aus einer Mischung aus
(A1) mindestens einem Urethanacrylat als emulgatorfreies, hydrophobes Bindemittel, welches durch energiereiche Strahlung polymerisierbare Gruppen enthält und
(A2) mindestens einer hydrophilen ungesättigten Polyesterverbindung auf Basis
a) mindestens einer ungesättigten Dicarbonsäure und/oder deren Anhydriden,
b) mindestens einer Polyalkylenoxidverbindung mit einem Molekulargewicht von 106 bis 2000 Dalton, mit mindestens 2 Hydroxylendgruppen und mindestens 2 Oxyalkylen-Einheiten, die zu mindestens 50 % aus Oxyethyleneinheiten bestehen, und
c) mindestens einer Hydroxy-funktionellen Verbindung, die pro Molekül mindestens eine polymerisierbare ungesättigte Gruppe, ausgewählt aus der Gruppe der Vinyl-, Allyl-, Methacryl- oder Acryl-Gruppen, aufweist.

2. Wasser- und Colöser-freie Bindemittelkompositionen gemäß Anspruch 1, **dadurch gekennzeichnet, dass** das Urethanacrylat (A1) aufgebaut ist aus
d) mindestens einer difunktionellen Hydroxyverbindung mit mindestens 2 eingebauten Oxyethylengruppen pro Molekül,
e) Acrylsäure und/oder Methacrylsäure und
f) mindestens einem Polyisocyanat mit an aliphatischen Kohlenstoff-Resten gebundenen Isocyanatgruppen.

3. Wasser- und Colöser-freie Bindemittelkompositionen gemäß Anspruch 1, **dadurch gekennzeichnet, dass** das Urethanacrylat (A1) einen Stabilisator zur Unterbindung einer vorzeitigen Polymerisation enthält.

4. Wasser- und Colöser-freie Bindemittelkompositionen gemäß Anspruch 3, **dadurch gekennzeichnet, dass** der Stabilisator 2,6-Di-t-butyl-4-methyl-phenol ist.

5. Wässrige Dispersionen, enthaltend Bindemittelkombinationen (A) gemäß Anspruch 1.

6. Verfahren zur Herstellung der wässrigen Dispersion gemäß Anspruch 5, **dadurch gekennzeichnet, dass** die Bindemittelkomposition gemäß Anspruch 1 mit Wasser verdünnt wird, wobei die gewünschte Lackviskosität und/oder Bindemittelkombinationen durch die Menge des zugegebenen Wassers eingestellt wird.

7. Verfahren zur Verdünnung der Bindemittelkomposition gemäß Anspruch 1, **dadurch gekennzeichnet, dass** zunächst eine 70 %ige Dispersion der Bindemittelkomposition gemäß Anspruch 1 in Wasser hergestellt wird, indem zu 70 Gew.-Teilen des Gemisches aus (A1) und (A2) 30 Gew.-Teile Leitungswasser unter langsamem Rühren zugesetzt werden und anschließend 2 Minuten bei einer Umfanggeschwindigkeit der Rührscheibe von ca. 20 m/sec mittels Dissolver emulgiert werden.

8. Verfahren zur Herstellung von Beschichtungen, **dadurch gekennzeichnet, dass** die wässrige Dispersion gemäß Anspruch 5 auf ein Substrat appliziert, dass Wasser entfernt und anschließend gehärtet wird.

9. Verfahren gemäß Anspruch 8, **dadurch gekennzeichnet, dass** das Substrat Holz ist.

10. Verfahren gemäß Anspruch 8, **dadurch gekennzeichnet, dass** die Härtung durch Einwirkung energiereicher Strahlung erfolgt.

11. Verwendung der Wasser- und Colöser-freien Bindemittelkompositionen (A) gemäß Anspruch 1 als Klebstoffe, Dichtmassen oder Lacke.

12. Verwendung der Wasser- und Colöser-freien Bindemittelkompositionen (A) gemäß Anspruch 1 als UV-härtende Reaktionskomponente in lösemittel- und aminfreien Wasserlacken.

## Claims

1. Water-free and cosolvent-free binder compositions (A) consisting of a mixture of
(A1) at least one urethane acrylate as emulsifier-free, hydrophobic binder containing groups which can be polymerized by high-energy radiation and
(A2) at least one hydrophilic unsaturated polyester compound based on
a) at least one unsaturated dicarboxylic acid and/or anhydrides thereof,
b) at least one polyalkylene oxide compound having a molecular weight of from 106 to 2000 daltons, having at least 2 hydroxyl end groups and at least 2 oxyalkylene units, composed of at least 50% of oxyethylene units, and
c) at least one hydroxy-functional compound containing per molecule at least one polymerizable unsaturated group selected from the group consisting of vinyl, allyl, methacrylic and acrylic groups.

2. Water-free and cosolvent-free binder compositions according to Claim 1, **characterized in that** the urethane acrylate (A1) is synthesized from
d) at least one difunctional hydroxy compound having at least 2 incorporated oxyethylene groups per molecule,
e) acrylic acid and/or methacrylic acid and
f) at least one polyisocyanate having isocyanate groups attached to aliphatic carbon radicals.

3. Water-free and cosolvent-free binder compositions according to Claim 1, **characterized in that** the urethane acrylate (A1) comprises a stabilizer for preventing premature polymerization.

4. Water-free and cosolvent-free binder compositions according to Claim 3, **characterized in that** the stabilizer is 2,6-di-t-butyl-4-methylphenol.

5. Aqueous dispersions comprising binder combinations (A) according to Claim 1.

6. Process for preparing the aqueous dispersion according to Claim 5, **characterized in that** the binder composition according to Claim 1 is diluted with water, the desired coating viscosity and/or binder combinations being adjusted by means of the amount of water added.

7. Process for diluting the binder composition according to Claim 1, **characterized in that** first of all a 70% dispersion of the binder composition according to Claim 1 in water is prepared by adding 30 parts by weight of mains water to 70 parts by weight of the mixture of (A1) and (A2), with slow stirring, and then emulsifying the mixture by means of a dissolver, with a peripheral stirrer-disc speed of about 20 m/sec, for 2 minutes.

8. Process for producing coatings, **characterized in that** the aqueous dispersion according to Claim 5 is applied to a substrate, the water is removed and then the coating material is cured.

9. Process according to Claim 8, **characterized in that** the substrate is wood.

10. Process according to Claim 8, **characterized in that** the curing takes place by exposure to high-energy radiation.

11. Use of the water-free and cosolvent-free binder compositions (A) according to Claim 1 as adhesives, sealants or paints.

12. Use of the water-free and cosolvent-free binder compositions (A) according to Claim 1 as a UV-curing reaction component in solvent-free and amine-free water-based paints and varnishes.

## Revendications

1. Compositions de liant (A) exemptes d'eau et de cosolvant, constituées par un mélange
(A1) d'au moins un uréthane-acrylate comme liant exempt d'émulsifiant, hydrophobe, qui contient des groupes polymérisables par un rayonnement riche en énergie et
(A2) d'au moins un composé polyester hydrophile insaturé à base
a) d'au moins un acide dicarboxylique insaturé et/ou ses anhydrides,
b) d'au moins un composé poly(oxyde d'alkylène) présentant un poids moléculaire de 106 à 2000 Daltons, comprenant au moins 2 groupes terminaux hydroxyle et au moins 2 unités d'oxyalkylène, qui sont constituées à raison d'au moins 50% d'unités d'oxyéthylène, et
c) d'au moins un composé à fonctionnalité hydroxy, qui présente par molécule au moins un groupe insaturé polymérisable, choisi dans le groupe des groupes vinyle, allyle, méthacryle ou acryle.

2. Compositions de liant exemptes d'eau et de cosolvant selon la revendication 1, **caractérisées en ce que** l'uréthane-acrylate (A1) est constitué par
d) au moins un composé hydroxy difonctionnel comprenant au moins 2 groupes oxyéthylène incorporés par molécule,
e) de l'acide acrylique et/ou de l'acide méthacrylique et
f) au moins un polyisocyanate présentant des groupes isocyanate liés à des radicaux carbonés aliphatiques.

3. Compositions de liant exemptes d'eau et de cosolvant selon la revendication 1, **caractérisées en ce que** l'uréthane-acrylate (A1) contient un stabilisant pour supprimer une polymérisation prématurée.

4. Compositions de liant exemptes d'eau et de cosolvant selon la revendication 3, **caractérisées en ce que** le stabilisant est le 2,6-di-t-butyl-4-méthylphénol.

5. Dispersions aqueuses, contenant des combinaisons de liant (A) selon la revendication 1.

6. Procédé pour la préparation de la dispersion aqueuse selon la revendication 5, **caractérisé en ce que** la composition de liant selon la revendication 1 est diluée à l'eau, la viscosité de laque souhaitée et/ou les combinaisons de liant étant réglées par la quantité d'eau ajoutée.

7. Procédé pour diluer la composition de liant selon la revendication 1, **caractérisé en ce qu'**on prépare d'abord une dispersion à 70% de la composition de liant selon la revendication 1 dans l'eau, **en ce qu'**on ajoute, à 70 parties en poids du mélange de (A1) et (A2), 30 parties en poids d'eau de ville sous agitation lente, puis on émulsifie pendant 2 minutes à une vitesse périphérique du disque d'agitation d'environ 20 m/sec au moyen d'un dissolveur.

8. Procédé pour la préparation de revêtements, **caractérisé en ce que** la dispersion aqueuse selon la revendication 5 est appliquée sur un substrat, l'eau est éliminée, puis on durcit.

9. Procédé selon la revendication 8, **caractérisé en ce que** le substrat est le bois.

10. Procédé selon la revendication 8, **caractérisé en ce que** le durcissement a lieu sous l'effet d'un rayonnement riche en énergie.

11. Utilisation des compositions de liant (A) exemptes d'eau et de cosolvant selon la revendication 1 comme adhésifs, masses d'étanchéité ou laques.

12. Utilisation des compositions de liant (A) exemptes d'eau et de cosolvant selon la revendication 1 comme composant de réaction durcissant aux UV dans des laques aqueuses exemptes de solvant et d'amine.
